# EUROPEAN PATENT APPLICATION

(11) **EP 3 960 250 A1**
(43) Date of publication of application: **02.03.2022**
(21) Application number: 21193665.3
(22) Date of filing: 27.08.2021
(51) Int. Cl.: A62B 23/02, B01D 39/16, B01D 39/18, B01D 39/08, A62B 18/02, A62B 23/06

(54) **NOSE MASK**

(30) Priority: 31.08.2020 KR 20200109989
(71) Applicant: AirLab Co., Ltd., Jeonju-si, Jeollabuk-do 55069 (KR)
(72) Inventor: LEE, Hyo-Gwang, Ik San City (KR)
(74) Representative: reuteler & cie SA

(57) **Abstract**

The present disclosure relates to a mask inserted into a nasal cavity, and more particularly, to a nose mask equipped with a filter that can be inserted into a nose to filter various fine dust contained in external air that is inhaled into the nose during respiration, and provide antibacterial and far-infrared emitting effects to improve health of a respiratory tract.

## Description

### CROSS-REFERENCE TO RELATED APPLICATIONS

This application claims priority under 35 U.S.C. §119 to Korean Patent Application No. 10-2020-0109989, filed on August 31, 2020, in the Korean Intellectual Property Office, the disclosure of which is incorporated herein by reference in its entirety.

### BACKGROUND

In general, masks having various shapes and structures have been used to prevent dust harmful to a human body, such as pollen, yellow dust, and bacteria, from being inhaled through a mouth or a nose.

However, the conventional masks generally used are provided to cover the nose and mouth together. There are problems in that masks manufactured in a shape and size ignoring the appearance tend to avoid wearing because attracts attention from people around when wearing, are uncomfortable to wear because they use a headband, earring-type strap, or a bandaid as fastening means, and are difficult to communicate through words while wearing because they cover a mouth.

In addition, when the conventional masks are worn, concave portions of both sides of a nose are lifted, and therefore, dust, foreign substances, and germs are highly likely to penetrate through a gap between the concave portions. As a result, the conventional masks could not be a perfect solution.

An example of a technique for solving this problem is disclosed in Patent Document 1 (Korean Patent No. 1132000 (registration on March 23, 2012)).

However, the above-mentioned related art and patent have a problem that the mask is made in the form of a cylindrical capsule with a straight line and is thus easily separated from the nose, and the mask is difficult to be replaced after being used for a certain period of time and is thus discarded after being used once as a plurality of filter units and filtration units formed of filters are sequentially connected.

In addition, an antibacterial degree or/and a fine dust collection rate are insufficient because a thickness of a thread for manufacturing the filter is thick and a cross-sectional area increases accordingly.

### SUMMARY

The present disclosure relates to a mask inserted into a nasal cavity, and more particularly, to a nose mask equipped with a filter that can be inserted into a nose to filter various fine dust contained in external air that is inhaled into the nose during respiration, and provide antibacterial and far-infrared emitting effects to improve health of a respiratory tract.

According to embodiments of the present disclosure, there is provided a nose mask that is worn in a nasal cavity (into a nose) to expand the nasal cavity to be able to increase a respiratory rate of the nasal cavity, has structural features that do not easily fall out of the nasal cavity, improves antibacterial properties based on a component/content of a filter, and has a much increased fine dust filter rate.

According to embodiments of the present disclosure, there is provided a nose mask that has a structure in which an outer wall portion of a shape holding member 300 of the nose mask is provided with a locking jaw protrusion 305 to reinforce the outer wall portion, thereby extending a nasal cavity of the nose mask, the locking jaw protrusion has a shape 305a inclined in a rounding state along the circumferential direction of the lower portion 301b of the outer wall portion of the shape holding member to facilitate the insertion, and a groove 301c including a U-shape or V-type is formed between a lower surface 305b of the locking jaw protrusion and an upper end portion 301b1 of a lower portion of the outer wall portion of the shape holding member so that nose hairs are inserted into the groove (space) to push the nose mask into a nasal cavity, preventing the nose mask from easily falling out of the nasal cavity.

According to embodiments of the present disclosure, there is provided a nose mask in which, in a filter for the nose mask made of Korean paper, the filter is manufactured by mixing 65 to 145 parts by weight of polyester and 1 to 9 parts by weight of cotton, based on 100 parts by weight of Korean paper, and increasing the number (1004 number) of threads or filaments to make the threads denser, thereby increasing antibacterial properties and greatly increasing a fine dust filter rate.

According to embodiments of the present disclosure, there is provided a nose mask including: a shape holding member 300 of the nose mask; an upper portion 301a of an outer wall portion of a shape holding member and a lower portion 301b of the outer wall portion of the shape holding member that constitutes the outer wall portion of the shape holding member with a locking jaw protrusion 305 formed on the outer wall portion of the shape holding member of nose mask interposed therebetween; in which the locking jaw protrusion 305 is provided below the upper portion 301a of the outer wall portion of the shape holding member, and has a shape 305a inclined along a circumferential direction of the lower portion 301b of the outer wall portion of shape holding member, a U-shaped or V-shaped groove 301c is formed between a lower surface 305b of the inclined locking jaw protrusion and an upper end portion 301b1 of the lower surface 305b of the outer wall portion of shape holding member lower portion 305b, a body 100 that is positioned inside the shape holding member 300 of the nose mask and provided with a through-hole through which air is to be communicated; and a filter 200 that is detachable from an outer surface of the body 100 and filters foreign substances contained in air inhaled into a nasal cavity, in which the filter 200 is manufactured by mixing 65 to 145 parts by weight of polyester and 1 to 9 parts by weight of cotton, based on 100 parts by weight of Korean paper.

Therefore, according to the present disclosure, it is possible to insert deep into the nasal cavity corresponding to the nasal cavity structure.

In addition, according to the present disclosure, by forming a locking jaw protrusion in a lower portion of an outer wall portion of a shape holding member 300 of a nose mask, it is possible to provide a structure that the nose mask is fixed when worn in a nasal cavity and does not fall out of the nasal cavity.

In other words, according to the present disclosure, a nose mask has a structure in which an outer wall portion of a shape holding member 300 of the nose mask is provided with a locking jaw protrusion 305 to reinforce the outer wall portion, thereby extending a nasal cavity of the nose mask, the locking jaw protrusion has a shape 305a inclined in a rounding state along the circumferential direction of the lower portion 301b of the outer wall portion of the shape holding member to facilitate the insertion, and a groove 301c including a U-shape or V-type is formed between a lower surface 305b of the locking jaw protrusion and an upper end portion 301b 1 of a lower portion of the outer wall portion of the shape holding member so that nose hairs are inserted into the groove (space) to push the nose mask into a nasal cavity, thereby preventing the nose mask from easily falling out of the nasal cavity.

In addition, according to the present disclosure, in a filter for the nose mask made of Korean paper, the filter is manufactured by mixing 65 to 145 parts by weight of polyester and 1 to 9 parts by weight of cotton with respect to 100 parts by weight of Korean paper, and increasing the number (1004 number) of threads or filaments to make the threads denser, thereby increasing antibacterial properties and greatly increasing a fine dust filter rate.

### BRIEF DESCRIPTION OF THE DRAWINGS

FIG. 1 is a perspective view of a shape holding member 300 of a nose mask according to an embodiment of the present disclosure.
FIG. 2 is a diagram illustrating a bottom surface of the shape holding member of the nose mask according to the embodiment of the present disclosure.
FIG. 3 is a first perspective view of the bottom surface of the shape holding member of the nose mask according to the embodiment of the present disclosure.
FIG. 4 is a second perspective view of the bottom surface of the shape holding member of the nose mask according to the embodiment of the present disclosure.
FIG. 5 is a cross-sectional view of the shape holding member of the nose mask according to the present disclosure.
FIG. 6 is a diagram illustrating a state in which a filter 200 is provided inside a shape holding member 300 of a nose mask.
FIG. 7 is a diagram illustrating a shape of a filter according to the present disclosure.
FIG. 8 is a diagram illustrating a state in which the filter is fitted in a body 100 made of a urethane component as an example.
FIG. 9 is a cross-sectional view of an assembled state of main overall components (shape holding member 300, body 100, filter 200) of a nose mask 400 according to the present disclosure.
FIG. 10 is an exploded view illustrating each configuration of a nasal cavity (nose) mask according to an embodiment of the present disclosure.
FIG. 11 is an exploded cross-sectional view illustrating each configuration of the nasal cavity (nose) mask according to the embodiment of the present disclosure.
FIG. 12 is a perspective view illustrating a body of the nasal cavity (nose) mask according to the embodiment of the present disclosure.
FIG. 13 is a use state diagram illustrating a flow of air in a nasal cavity (nose) insertion type mask according to an embodiment of the present disclosure.
FIGS. 14A and 14B are test reports showing an antibacterial effect of the filter according to the present disclosure, and FIG. 14C Translating Fig 14A and 14D Translating Fig 14B.
FIGS. 15A and 15B are test reports showing dust collection efficiency that is the effect of the filter according to the present disclosure.

### DETAILED DESCRIPTION

Hereinafter, some embodiments of the present disclosure will be described with reference to the exemplary drawings. It is to be noted that in giving reference numerals to components of the accompanying drawings, the same components will be denoted by the same reference numerals even though they are illustrated in different drawings. In addition, in describing an embodiment of the present disclosure, a detailed description of substantially the same content will be omitted.

When it is mentioned that any component is "connected" or "coupled" to another component, it is to be understood that any component is directly connected or coupled to another component or is connected or coupled to another component with the other component interposed therebetween.

In addition, when it is described that a component is provided, formed, or constituted, it should be construed in substantially the same sense unless specifically defined.
Korean paper means it has made by a unique method in Korea using the bark of mulberry trees as raw materials.

In addition, in the present disclosure, a lower surface 305b or a lower side surface 305d of the locking jaw protrusion indicate a lower surface or a bottom surface of the locking jaw protrusion 305 or the shape inclined in a round state 305a itself.

As another example, the shape of the inclined state and the horizontal state is also possible, which falls within the scope of the present disclosure.

Also, according to an embodiment of the present disclosure, a nasal cavity mask and a nose mask are interpreted as the same meaning.

The present disclosure corresponds to the improved invention of the applicant's earlier registration number 10-1572993 and earlier application number 10-2019-0014858, and descriptions of overlapping basic technical ideas and configurations (reference numerals, etc.) will be omitted.

Hereinafter, an embodiment of the present disclosure will be described with reference to each drawing.

According to the present disclosure, upper and lower surfaces of a nose mask are in an open state for smooth air communication by being inserted deep into the nasal cavity (into a nose).

Looking at a structure and shape of silicone (double tube, outer wall portion/inner wall portion) which is one component of a shape holding member 300 of a nose mask 400, the shape holding member 300 plays the role of extending the nasal cavity positioned deep inside a nose during sleep breathing and has a structure that can breathe well with a smooth flow of air without falling out easily.

First, the main differences between the present disclosure and the previous registration (Applicant Hyo-Kwang Lee (CEO of Airlab), earlier registration number 10-1572993) are as follows.

- Structure of the shape holding member 300 of the nose mask 400

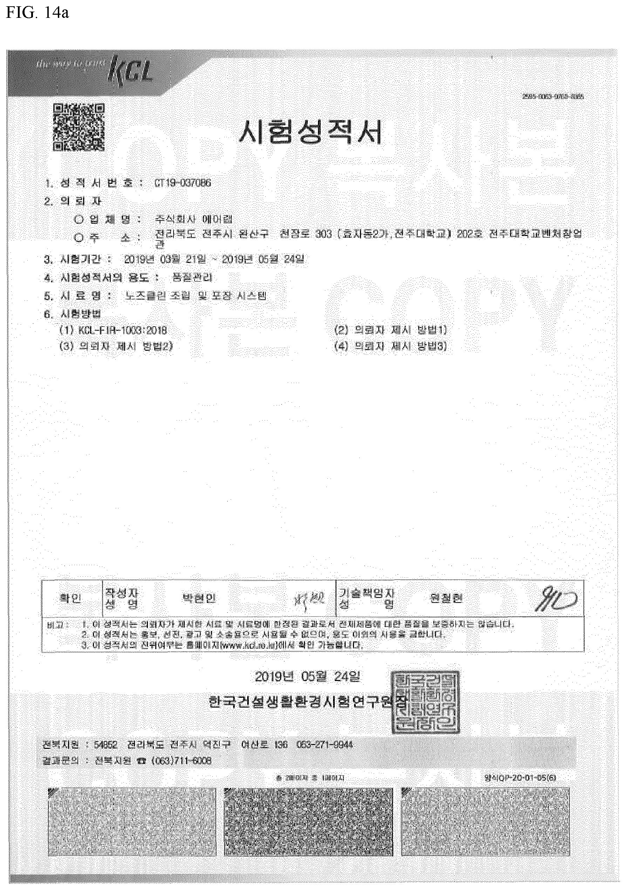

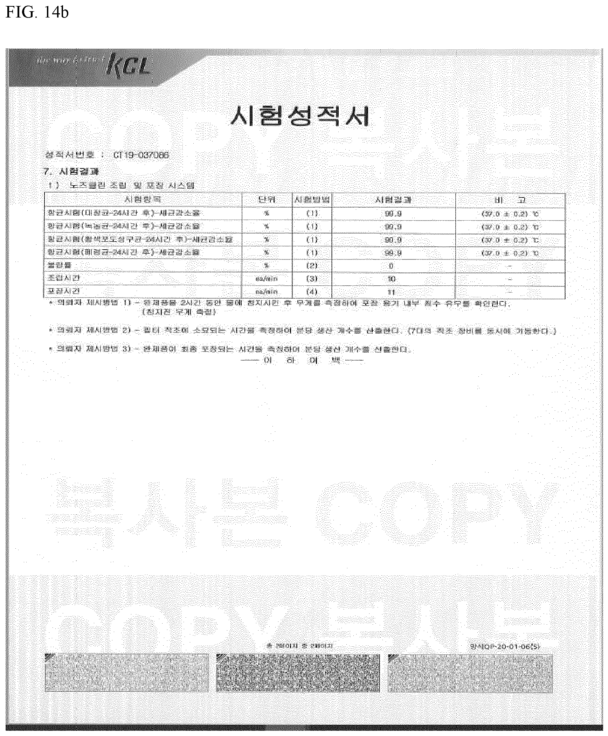

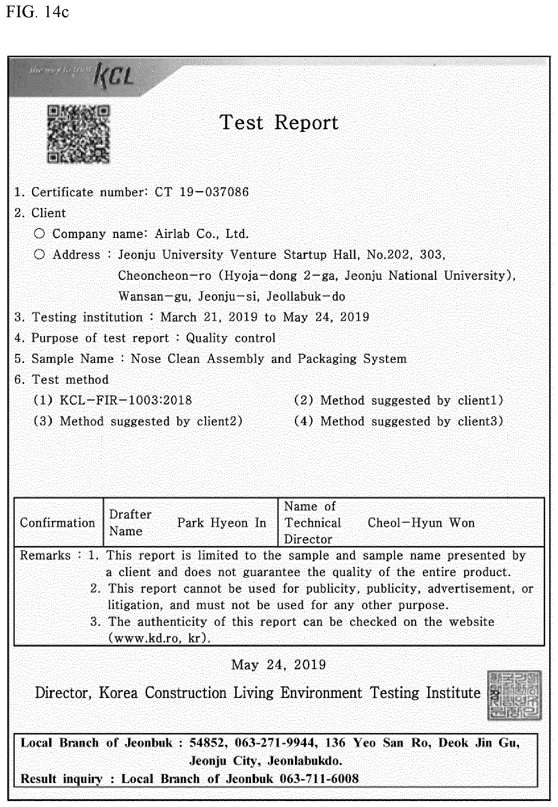

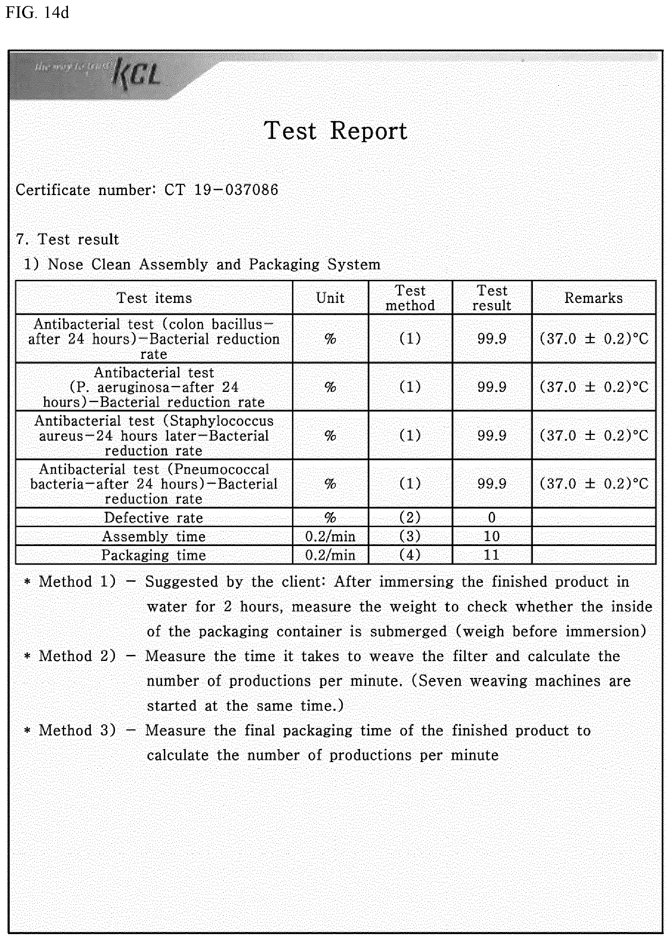

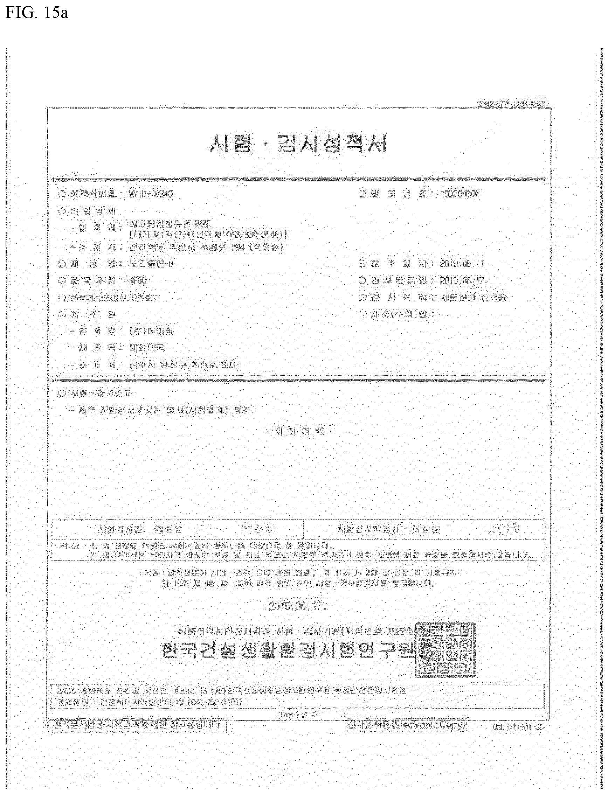

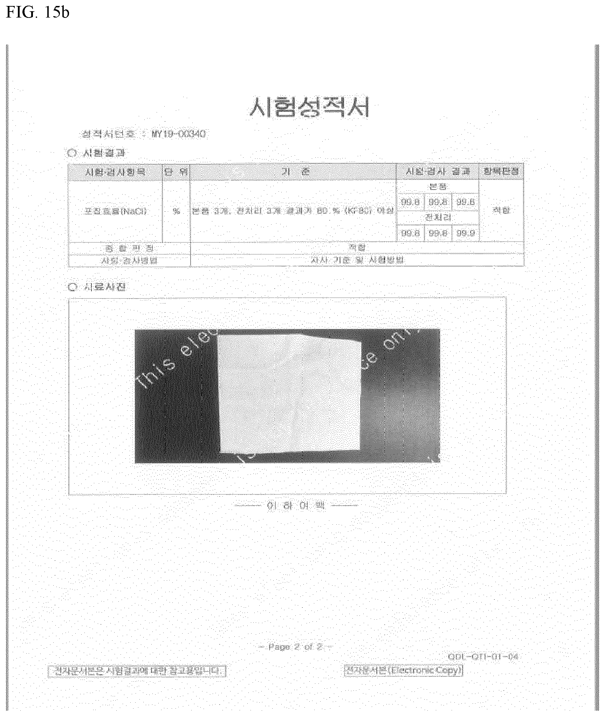

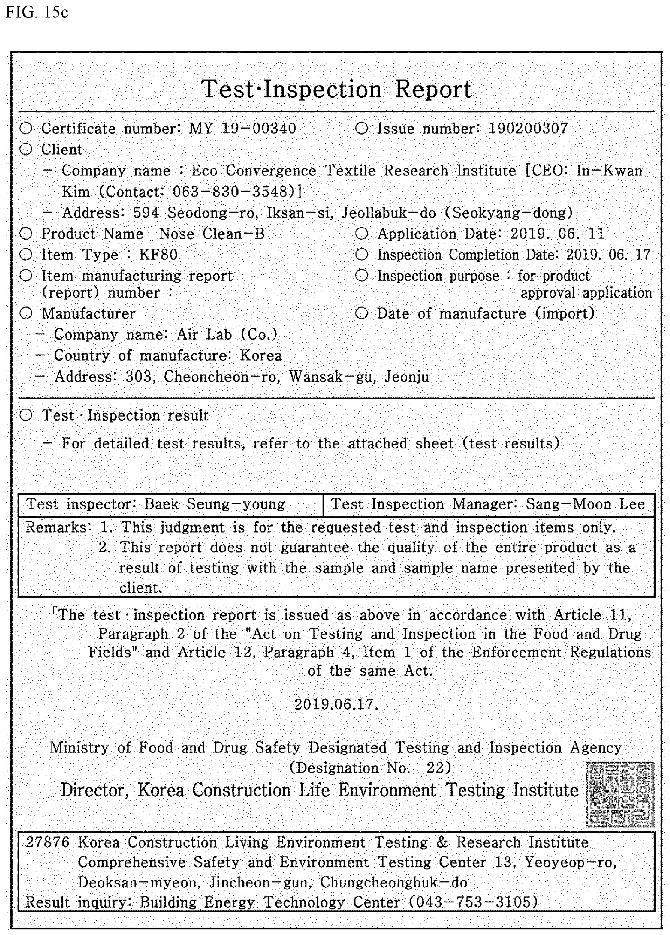

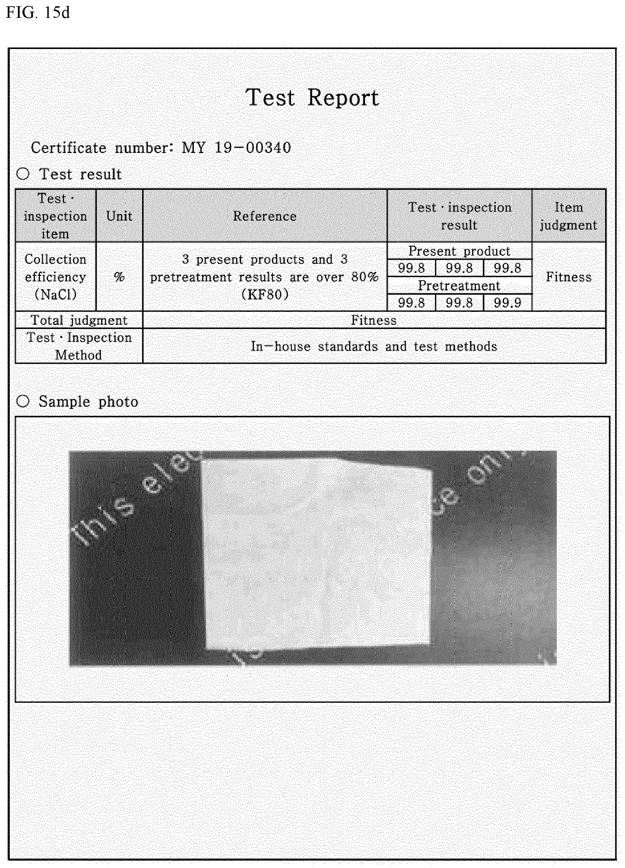

- The content (a filter manufactured by mixing 65 to 145 parts by weight of polyester and 1 to 9 parts by weight of cotton, based on 100 parts by weight of Korean paper) of the filter 200 component (Korean paper, polyester, and cotton) is different, the flow of air in the nasal cavity is smoothed by increasing the number of components (1004 in total) to make the filter denser, and a fine dust filter rate is remarkably increased based on the components, contents, and number of components of the above filters (refer to test report of FIGS. 14A/C, 14B/D and FIGS. 15A/C, 15B/D).

- A component of a body is changed from LDP to urethane with good elasticity, which increased flexibility in the nose and improved usability.

The structure of the shape holding member 300 of the nose mask 400 will be described.

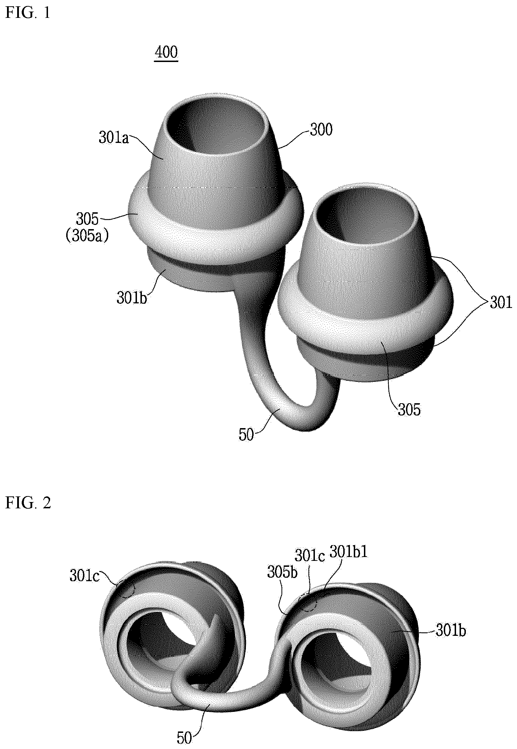

FIG. 1 is a perspective view of the shape holding member 300 of the nose mask according to the embodiment of the present disclosure.
FIG. 2 is a diagram illustrating a bottom surface of the shape holding member of the nose mask according to the embodiment of the present disclosure.

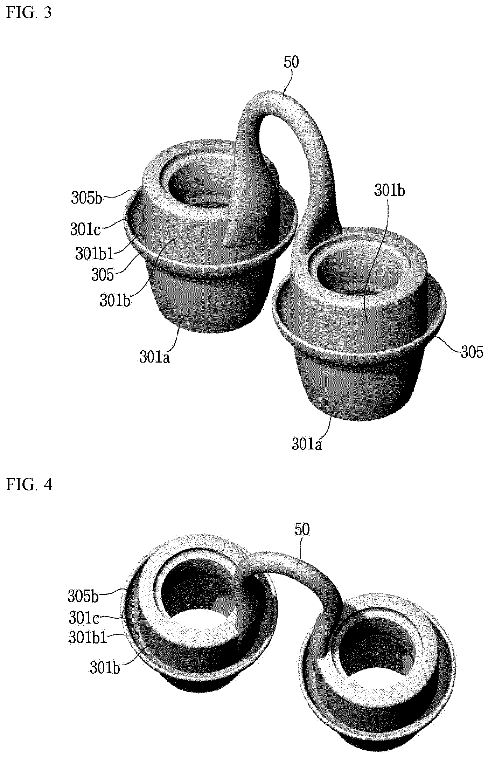

FIG. 3 is a first perspective view of the bottom surface of the shape holding member of the nose mask according to the embodiment of the present disclosure.
FIG. 4 is a second perspective view of the bottom surface of the shape holding member of the nose mask according to the embodiment of the present disclosure.

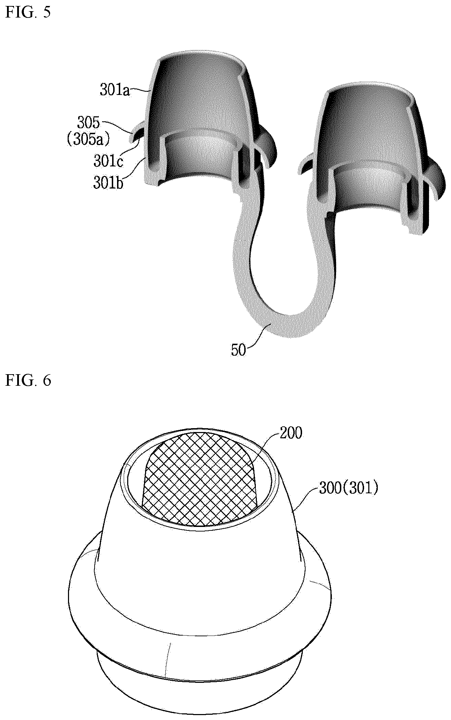

FIG. 5 is a cross-sectional view of the shape holding member of the nose mask according to the present disclosure.

As illustrated in each drawing, the nose mask includes an outer wall portion 301 of the shape holding member 300; and an upper portion 301a of the outer wall portion of the shape holding member and a lower portion 301b of the outer wall portion of the shape holding member that constitutes the outer wall portion of the shape holding member, in which the upper portion 301a of the outer wall portion of the shape holding member is provided.

In addition, according to the embodiment of the present disclosure, the mask nose includes the outer wall portion 301 of the shape holding member 300; and the upper portion 301a of the outer wall portion of the shape holding member and the lower portion 301b of the outer wall portion of the shape holding member that constitutes the outer wall portion of the shape holding member with a locking jaw protrusion 305 formed on the outer wall portion of the shape holding member interposed therebetween.

The locking jaw protrusion 305 is provided between an upper portion 301a of the outer wall portion of the shape holding member and a lower portion 301b of the outer wall portion of the shape holding member, and has a structure of an inclined shape 305a in a rounding state along a circumferential direction of the lower portion 301b of the outer wall portion of the shape holding member to facilitate insertion into the nasal cavity, but may also be a horizontal state without being inclined.

The rounding and/or inclined structure in the above is a structure for maximizing the ease of insertion.

A groove 301c, which is one space including a U- or V-type, is formed between the locking jaw protrusion lower surface 305b and the upper end portion 301b1 of the lower part of the outer wall portion of the shape holding member, and thus, nose hairs get caught in the groove when the nose mask is inserted into the nasal cavity, the nose mask is prevented from easily falling out of the nasal cavity due to the role of resistance and pushing.

The present disclosure as described above will be further described.

In the embodiment of the present disclosure, one or two conical shape holding members 300 are connected by a U-shaped connecting ring 50, and is a product molded of a silicone soft synthetic resin as a material.

When inserting into the nasal cavity (nose), an elastic force of the conical shape holding member made of the silicone material naturally expands and maintains the nasal cavity, thereby allowing air to flow into the nose with smooth breathing.

After wearing, to prevent dripping out of the nose, the outwardly protruding surface (locking jaw) is folded and seated inside when inserted into the nose, and when the protruding surface (locking jaw protrusion) 305 is unfolded in the worn state, it is not caught in the nose hair and does not flow down, and thus, may be stably worn and maintained in the worn state.

In addition, the locking jaw protrusion 305 formed on the outer wall portion of the shape holding member may stably maintain the shape of the nose mask with the support force by ribs in contact with the silicone, thereby increasing the smooth circulation of air into the nose.

The reinforcing ribs in the form of the locking jaw protrusion 305 provided on the conical shape holding member stably maintains and supports the shape of the nose mask inside the nasal cavity, thereby allowing the nasal cavity to naturally expand and breathe smoothly.
FIG. 6 is a diagram illustrating a state in which the filter 200 is provided inside the shape holding member 300 of the nose mask according to the present disclosure.

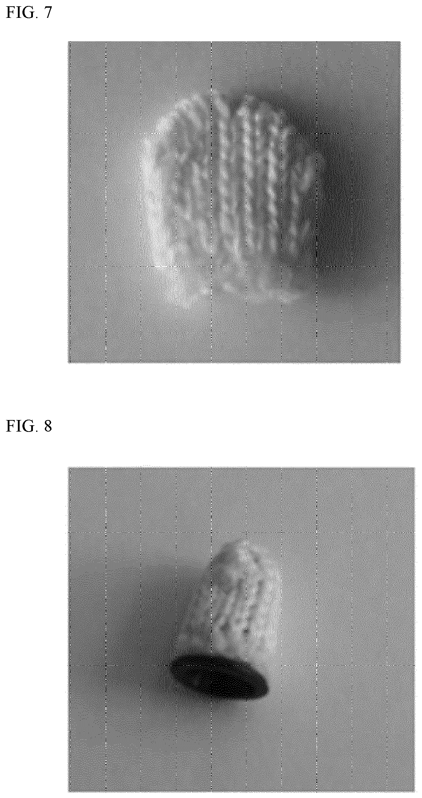

FIG. 7 is a diagram illustrating the filter by the components and content according to the embodiment of the present disclosure.
FIG. 8 is a diagram illustrating a state in which the filter is fitted in a black body 100 made of a urethane component as an example.

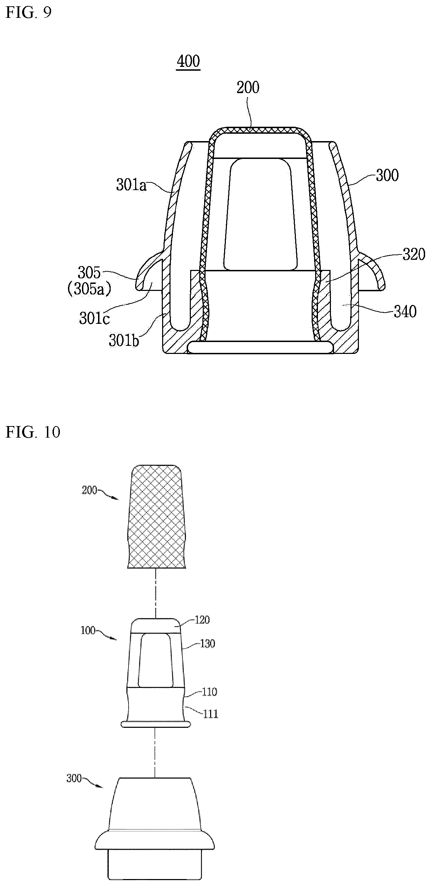

FIG. 9 is a cross-sectional view of an assembled state of main overall components (shape holding member 300, body 100, and filter 200) of the nose mask 400 according to the present disclosure.
FIG. 10 is an exploded view illustrating each configuration of a nasal cavity (nose) mask according to the embodiment of the present disclosure.

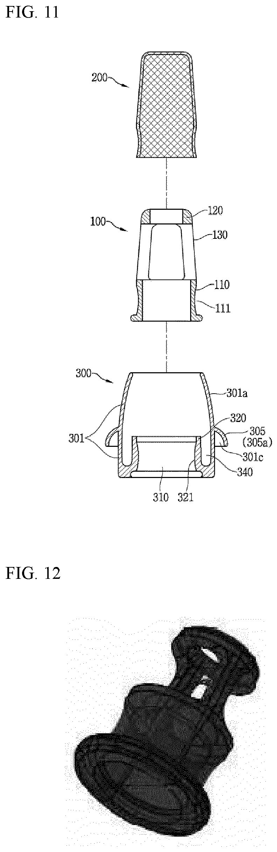

FIG. 11 is an exploded cross-sectional view illustrating each configuration of a nasal cavity (nose) mask according to the embodiment of the present disclosure.
FIG. 12 is a perspective view illustrating the body of the nasal cavity (nose) mask made of urethane according to the embodiment of the present disclosure.

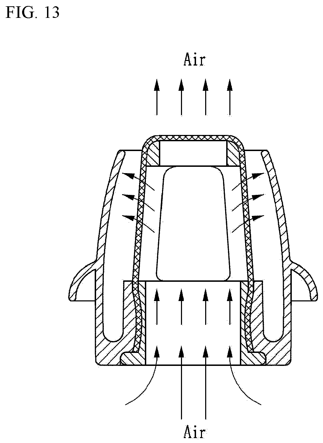

FIG. 13 is a use state diagram illustrating a flow of air in a nasal cavity (nose) insertion type mask according to the embodiment of the present disclosure.

A description based on each of the above drawings is as follows.

The shape holding member 300 of the nose mask is configured to include the outer wall portion 301 of the shape holding member 300; and the upper portion 301a of the outer wall portion of the shape holding member and the lower portion 301b of the outer wall portion of the shape holding member that constitutes the outer wall portion of the shape holding member with the locking jaw protrusion 305 formed on the outer wall portion of the shape holding member interposed therebetween.

The locking jaw protrusion 305 is provided below the upper portion 301a of the outer wall portion of the shape holding member, and has a shape 305a inclined along a circumferential direction of the lower portion 301b of the outer wall portion of shape holding member.

The U-shaped or V-shaped groove 301c is formed between a lower surface 305b of the inclined locking jaw protrusion and an upper end portion 301b1 of the lower surface 305b of a lower portion of the outer wall portion of the shape holding member.

The outer wall portion 301 of the shape holding member that is divided into the upper portion 301a of the shape holding member 300 of the nose mask and the lower portion 301b of the outer wall portion of the shape holding member; and

the locking jaw protrusion 305 that is provided below the upper portion 301a of the outer wall portion of the shape holding member, and has the shape 305a inclined along a circumferential direction of the lower portion 301b of the outer wall portion of shape holding member are provided, in which the shape holding member 300 of the nose mask is provided in which the U-shaped or V-shaped groove 301c is formed between the lower surface 305b of the inclined locking jaw protrusion and the upper end portion 301b1 of the lower surface 305b of the outer wall portion of shape holding member lower portion 305b.

As illustrated in FIG. 9, the nose mask 400 that is inserted into the nose to filter external air inhaled during breathing includes the shape holding member 300 of the nose mask; and the upper portion 301a of an outer wall portion of a shape holding member and a lower portion 301b of the outer wall portion of the shape holding member that constitutes the outer wall portion of the shape holding member with a locking jaw protrusion 305 formed on the outer wall portion of the shape holding member of nose mask interposed therebetween, the body 100 that is positioned inside the shape holding member 300 of the nose mask and has a through-hole (as shown in FIG. 12), through which air is to be communicated, provided at a middle portion thereof; and the filter 200 that is detachable from an outer surface of the body 100 and filters foreign substances contained in air inhaled into a nasal cavity.

In other words, a nose mask including a filter which is inserted into a nose and filters external air that is inhaled during respiration includes the shape holding member 300 of the nose mask; and the upper portion 301a of an outer wall portion of a shape holding member and a lower portion 301b of the outer wall portion of the shape holding member that constitutes the outer wall portion of the shape holding member with a locking jaw protrusion 305 formed on the outer wall portion of the shape holding member of nose mask interposed therebetween, in which the locking jaw protrusion 305 being provided under the upper portion 301a of the outer wall portion of the shape holding member, and having a shape 350a inclined along a circumferential direction of the lower portion 301b of the outer wall portion of shape holding member; and in which the U-shaped or V-shaped groove 301c is formed between the lower surface 305b of the inclined locking jaw protrusion and an upper end portion 301b1 of the lower surface 305b of the outer wall portion of shape holding member lower portion 305b, the body 100 that is positioned inside the shape holding member 300 of the nose mask and has a through-hole, through which air is to be communicated, provided at a middle portion thereof; and the filter 200 that is detachable from an outer surface of the body 100 and filters foreign substances contained in air inhaled into a nasal cavity.

Additionally, FIGS. 9, 10 and 11 will be described.

The nose mask inserted into the nose to filter external air inhaled during respiration includes the body 100 into which the filter 200 whose upper portion, lower portion, and side surface is open for smooth air communication is fitted; the filter 200 that is detachable from the outer surface of the body 100 and filters foreign substances contained in the external air; and a shape holding member 300 that closely fixes a portion of a filter 200 to a body 100 so that the filter 200 disposed to surround an outer surface of the body 100 does not separate from the body 100, constitutes a double wall including an inner wall portion 320 and an outer wall portion 300 and prevents runny nose of an inner wall of the nasal cavity from contacting the filter 200 as an outer wall portion 301a is formed to be higher than the inner wall portion 320, and includes a runny nose receiving part 340 that can accommodate the runny nose flowing along the inner wall of the nasal cavity.

In the above, the nose mask includes a support lower portion 110 that is positioned at a lower part of the body 100, and has a cylindrical inside through which an air communication hole 310 for smooth communication of air is vertically penetrated, and an outer side around which a coupling groove 111 is formed so as to combine and support a shape holding member 300; a support upper part 120 that is formed at a position spaced by a certain distance upward from the support lower part 110, and is formed in a ring shape through which a center is penetrated; and at least one connecting bar 130 that supports each component by connecting between the support lower part 110 and the support upper portion 120.

Hereinafter, the filter 200 will be described.

The filter is made of Korean paper, polyester, and cotton, and more specifically, is manufactured by mixing 65 to 145 parts by weight of polyester (38 to 58 wt% by weight), 1 to 9 parts by weight of cotton (0.5 to 3.5 wt%), based on 100 parts by weight (40 to 60 wt%) of Korean paper and may further include 1 to 4 parts by weight (0.5 to 2.5 wt%) of phytoncide additionally or optionally.

In the above case, when the Korean paper is less than the lowest reference (40 wt%), the thread is not broken or molded, and when the Korean paper exceeds the highest reference (60 wt%), each thread itself becomes too thick and a cross-sectional area becomes large, so the threads are not dense. As a result, air communication is not possible, the performance of fine dust filtering is lowered, and it is difficult to weave for filter manufacturing.

When the polyester is less than the lowest reference (65 parts by weight), the thread is broken, and when the polyester exceeds the highest reference (145 parts by weight), the polyester becomes thick and may not be grinded, so manufacturing is not possible.

When the cotton is less than the lowest reference (1 part by weight), it is not easy to manufacture Korean paper, and when the cotton exceeds the highest reference (9 parts by weight), it is difficult to twist and it is not easy to manufacture.

Additionally, the overall critical meaning of the content values for the component is clearly shown through the test reports (FIGS. 14 and 15) of the antibacterial degree and the dust collection efficiency showing the performance or effect of the manufactured filter.

In addition, since the effect is clear based on the test report, separate examples, comparative examples, and experimental examples are not shown.

In other words, it can be seen from data (test report, etc.) showing the effect (especially antibacterial properties, fine dust filter rate, etc.) of the filter and the critical meaning of the filter components and the content thereof that the filter is clearly advanced.

FIGS. 14A/C and 14B/D are test reports showing an antibacterial effect of the filter according to the present disclosure.

FIGS. 15A/C and 15B/D are test reports showing dust collection efficiency that is the effect of the filter according to the present disclosure.

As illustrated in FIGS. 14B/D, in the antibacterial test by the filter of the present disclosure, the bacterial reduction rate shows a test result of 99.9%.

As illustrated in FIGS. 15B/D, it shows a test result of 99.8% in the collection efficiency by the filter of the present disclosure.

In the present disclosure, 1 to 4 parts by weight of rose geranium extract and 0.1 to 0.3 parts by weight of carbon fiber may be further included for enhancing the effect of the present disclosure and other effects in the filter component/content.

The rose geranium belongs to the species pelargonium, and emits penny royal mint and citronella scents, and due to the unique aromatic property (INSECT REPELLENT PERFUME) of perfume of the rose geranium, it has the effect of effectively blocking and eradicating various pests from approaching.

The carbon fiber enhances the bonding strength of other components and increases durability.

The filter for the above effect is densely manufactured by a weaving machine with a total of 1004 fine threads (1 strand (1004 filaments) with 5 threads gathered) by combining Korean paper 30 count (Korean paper + cotton), specification 35/144/2P/PU30D (the number of polyester filaments 144 × 2 = 288F + 30D polyester + adhesive yarn), specification 55D/216F SD (the number of polyester filaments 216F) X (2 to 3 strands), and 40 finishing thread adhesive yarns of 15G to 18G specifications, and thus, can obtain the same performance/effect as in FIGS. 14 and 15 as described above.

In other words, the filter is manufactured by preferably 30 (Korean paper + cotton) in the range of 28 to 32 of Korean paper yarn, 35/144/2P/PU30D (the number of polyester filaments in the range of 140-148, preferably 144 × 2 = 288F + 30D polyester + adhesive yarn), 55D/216F SD (preferably 216F in the range of 212-220 polyester filaments) X (2 to 3 strands), and preferably 40 in the range of 15G to 18G 38 to 42 of finishing thread adhesive yarn.

The above-described nose mask (the product name NoseClean in which the patent is implemented) will be described.

Air polluted with pollutants such as ultrafine dust, yellow dust, pollen, environmental dust, and automobile exhaust gas contained in externally polluted air inhaled into the nasal cavity is filtered by static electricity of fine hairs of a natural filter (1004F (strand) synthesized from Korean paper, polyester, natural (cotton), and phytoncide), which is a product that can purify polluted bacteria and breathe clean air.

The filter is an 'eco-friendly filter' using natural Korean paper and cotton, which is a 'hygienic product' that can be replaced with a disposable Korean paper filter, and implements 'comfortable wearing' and 'minimization of exposure' to the outside of the nasal cavity are realized with thin and transparent silicone.

In addition, the 'phytoncide' added to the natural filter contributed to 'strengthening the bacterial purification function' in the nose.

When the shape holding member made of thin and transparent silicone is worn deep inside the nose, the shape holding member adheres to a skin, is not comfortable to wear, is not visible from the outside, and is manufactured with 1004 strands of fillers, so air communication is good.

Compared to other products, due to moisture generated from a double tube (silicone) structure during breathing, fine hairs on a surface of 'natural paper', and static electricity from the polyester 1004F microfiber,

1) 70% more improved to block 'fine dust' of 2.5*µ*m or less,

2) As a result of the automobile exhaust gas test, the effect of 'blocking 20-30% more improvement' was shown.

### (Nitrogen dioxide, sulfur dioxide, acetaldehyde, formaldehyde, and ammonia)

The present disclosure relates to a mask inserted into a nasal cavity, and more particularly, to a nose mask equipped with a filter that can be inserted into a nose to filter various fine dust contained in external air that is inhaled into the nose during respiration, and provide antibacterial and far-infrared emitting effects to improve health of a respiratory tract.

The spirit of the present disclosure has been illustratively described hereinabove. It will be appreciated by a person of ordinary skill in the art that various modifications and alterations may be made without departing from the essential characteristics of the present disclosure. Therefore, the embodiments implemented in the present disclosure are not intended to limit the technical idea of the present disclosure, but to explain, and the scope of the technical idea of the present disclosure is not limited by this embodiment. The scope of the present disclosure should be interpreted by the following claims and it should be interpreted that all spirits equivalent to the following claims fall within the scope of the present disclosure.

## Claims

1. A nose mask including a filter, having Korean paper, polyester and cotton ;
**characterized in that**:
the filter for the nose mask made of Korean paper, polyester, and cotton includes 65 to 145 parts by weight of polyester, 1 to 9 parts by weight of cotton, and 1 to 4 parts by weight of phytoncide based on 100 parts by weight of Korean paper.

2. The nose mask of claim 1, further comprising: 1 to 4 parts by weight of rose geranium extract and 0.1 to 0.3 parts by weight of carbon fiber.

3. The nose mask of claims 1 or 2, wherein the filter is manufactured by combining 28 to 32 Korean paper yarn (Korean paper + cotton), 35/144/2P/PU30D (140 to 148 number of polyester filament specifications 144 × 2 = 288F + 30D polyester + adhesive yarn), 55D/216F SD (212 to 220 number of polyester filament specifications 216F) X (2 to 3 strands), and 38 to 42 number of finishing thread adhesive yarn 15G-18G specification.

4. The nose mask of claim 3, wherein the filter is manufactured by combining 35/144/2P/PU30D (polyester filament 144 × 2 = 288F + 30D polyester + adhesive yarn), 55D/216F SD (the number of polyester filaments 216F) X (2 to 3 strands), finishing thread adhesive yarn 15G to 18G, 40 number.

5. The nose mask of claims 1 or 2, the nose mask, comprising:
a shape holding member (300) of the nose mask;
an outer wall portion (301) of the shape holding member (300);
an upper portion (301a) of an outer wall portion of a shape holding member and a lower portion (301b) of the outer wall portion of the shape holding member that constitutes the outer wall portion of the shape holding member with a locking jaw protrusion (305) formed on the outer wall portion of the shape holding member interposed therebetween;
the locking jaw protrusion (305) is provided below the upper portion (301a) of the outer wall portion of the shape holding member, and has a shape (305a) inclined along a circumferential direction of the lower portion (301b) of the outer wall portion of shape holding member, and
a U-shaped or V-shaped groove (301c) is formed between a lower surface (305b) of the inclined locking jaw protrusion and an upper end portion (301b1) of the lower surface 305b of a lower portion of the outer wall portion of the shape holding member.

6. The nose mask of claims 1 or 2, wherein the nose mask including the filter which is inserted into a nose and filters external air that is inhaled during respiration, the nose mask comprising:
a shape holding member (300) of the nose mask;
an upper portion (301a) of an outer wall portion of a shape holding member and a lower portion (301b) of the outer wall portion of the shape holding member that constitutes the outer wall portion of the shape holding member with a locking jaw protrusion (305) formed on the outer wall portion of the shape holding member of nose mask interposed therebetween, the locking jaw protrusion (305) being provided under the upper portion (301a) of the outer wall portion of the shape holding member, having a shape (305a) inclined along a circumferential direction of the lower portion (301b) of the outer wall portion of shape holding member, and a U-shaped or V-shaped groove (301c) being formed between a lower surface (305b) of the inclined locking jaw protrusion and an upper end portion (301b1) of the lower surface (305b) of the outer wall portion of shape holding member lower portion (305b);
a body (100) that is positioned inside the shape holding member (300) of the nose mask and has a through-hole, through which air is to be communicated, provided at a middle portion thereof; and
the filter (200) that is detachable from an outer surface of the body (100) and filters foreign substances contained in air inhaled into a nasal cavity.

7. The nose mask of claim 6, wherein a shape holding member (300) that closely fixes a portion of a filter (200) to a body (100) so that the filter (200) disposed to surround an outer surface of the body (100) does not separate from the body (100), constitutes a double wall including an inner wall portion (320) and an outer wall portion (300), prevents runny nose of an inner wall of the nasal cavity from contacting the filter (200) as an outer wall portion (301a) is formed to be higher than the inner wall portion (320), and includes a runny nose receiving part (340) that accommodates the runny nose flowing along the inner wall of the nasal cavity;
a support lower portion (110) that is positioned at a lower part of the body (100), and has a cylindrical inside through which an air communication hole (310) for smooth communication of air is vertically penetrated, and an outer side around which a coupling groove (111) is formed so as to combine and support a shape holding member (300);
a support upper part (120) that is formed at a position spaced by a certain distance upward from the support lower part (110), and is formed in a ring shape through which a center is penetrated; and
at least one connecting bar (130) that supports each component by connecting between the support lower part (110) and the support upper portion (120).
